# EUROPEAN PATENT APPLICATION

(11) **EP 0 955 253 A2**
(43) Date of publication of application: **10.11.1999**
(21) Application number: 99303560.9
(22) Date of filing: 06.05.1999
(51) Int. Cl.: B65G 49/04, B65G 49/02, B65G 25/02

(54) **Apparatus and method for transferring articles through a plurality of processing stations**

(30) Priority: 06.05.1998 GB 9809579; 15.07.1998 GB 9815240
(71) Applicant: Optimal Technologies Limited, Letchworth Garden City, Hertfordshire SG6 2HB (GB)
(72) Inventor: Conway, Trevor Michael, Hertfordshire SG6 4JG (GB); Green, Dennis Richard, Lincoln LN5 8SS (GB)
(74) Representative: Burrows, Anthony Gregory

(57) **Abstract**

A system includes conveying apparatus for transferring articles, for example lenses, through processing stations and comprising a carriage 7, a cam-and-follower arrangement 14,15 which guides the carriage 7 along an endless, substantially square, path in a vertical plane such that substantially vertical movements of the carriage 7 alternate with substantially horizontal movements of the carriage, and a single motor 18 arranged to advance the carriage 7 along the path. A beam 6 extends over the stations and is mounted on the carriage 7 so as to be vertically reciprocable thereon, and a second motor 26 is arranged to drive the beam 6 vertically relative to the carriage 7. The beam 6 picks up, indexes horizontally, and lowers carriers of the lenses. Each carrier may consist of a basket suspended from a bracket, or upper and lower U-shaped supports of which the lower is suspended from the upper either in a detachable manner or in a manner allowing the upper support to be swung down from a treatment position above the lower support to a loading/unloading position below the lower support.

## Description

This invention relates to conveying apparatus and a conveying method.

According to a first aspect of the present invention, there is provided conveying apparatus comprising a carriage, guide means arranged to guide said carriage along a path such that a substantially vertical movement of said carriage is followed by a substantially horizontal movement of said carriage, and driving means arranged to advance said carriage along said path.

According to a second aspect of the present invention, there is provided a method comprising advancing a carriage along a path while guiding said carriage such that a substantially vertical movement of said carriage is followed by a substantially horizontal movement thereof.

Owing to the guiding of the motion of the carriage by the guide means, the driving means can take the form of a single motor.

Advantageously, the motion of the carriage along the path is employed to transfer one or more articles through a plurality of processing stages or stations, which may take the form of processing tanks.

The guide means preferably takes the form of a cam-and-follower arrangement, with the cam being endless and supported on the carriage or another support and the follower being supported on that other support or the carriage, to cause the path of movement of the carriage to be endless. The driving means may include a rotary arm radially slidably linked to the follower or the cam, as the case may be.

If it is desired that the component(s) should be raised and lowered in at least some of the processing stages, a beam may extend over such stages and be mounted on the carriage so as to be substantially vertically movable relative thereto by a second driving means which could include a second motor or could be operated by such single motor of the first-mentioned driving means.

According to a third aspect of the present invention, there is provided a carrier comprising an upper support, a lower support supported by said upper support and for unloadably supporting at least one article to be treated, said upper support being displaceable relative to said lower support from a treatment position in which unloading of the article(s) from said lower support is hindered by said upper support to an unloading position in which said unloading is not hindered by said upper support.

The lower support can be a horizontal bar with one or more clips for receiving the article(s) or can be a basket with or without such clip(s).

According to a fourth aspect of the present invention, there is provided a method comprising loading at least one article into a carrier with a support of said carrier being located beneath said article(s), bringing said support to above said article(s), treating said article(s), bringing said support to below said article(s), and unloading said article(s) from said carrier.

According to a fifth aspect of the present intention, there is provided a method comprising loading at least one article into a lower support of a carrier with said lower support of said carrier being located beneath said article(s) and an upper support of said carrier not hindering said loading, bringing said upper support to above said article(s), treating said article(s), bringing said upper support to a position in which it does not hinder unloading of said article(s), and unloading said article(s) from said lower support.

Owing to these aspects of the invention, loading and unloading of the article(s) can be performed in a substantially unhindered manner.

In the method it is possible to employ a carrier comprising only one elongate support from which the article(s) is/are suspended in the treatment condition and for the support to be inverted for loading and unloading of the article(s). However, in certain circumstances, this arrangement can be disadvantageous, for example cleaning liquid can drip onto the article(s) from suspension members, e.g. clips, below the support in the treatment condition. Therefore, in such circumstances, the combination of an upper support and a lower support as mentioned above is preferable.

The article(s) can take the form of one or more machined articles, for example optical lenses or pieces of jewellery.

The treatment can take the form of, for example, cleaning or sterilizing.

In order that the invention may be clearly and completely disclosed, reference will now be made, by way of example, to the accompanying drawings, in which:-
Figure 1 is a fragmentary front elevation of a system including apparatus for transferring articles, in this case optical lenses, through a plurality of processing tanks, for example cleaning tanks,
Figure 2 is a side elevation taken in the direction of the arrow II in Figure 1, but with cabinet walls broken away for clarity of illustration,
Figure 3 is a side elevation taken in the direction of the arrow III in Figure 1, but again with cabinet walls broken away for the sake of clarity,
Figure 4 is a perspective view from above of a modified version of a carrier of the system, with the carrier in a treatment condition,
Figure 5 is a view corresponding to Figure 4, but with the carrier in a loading or unloading condition,
Figure 6 is a view similar to Figure 4, but of another modified version of the carrier, and

Figure 7 is a view similar to Figure 5, but of a lower support constituting part of that other modified version.

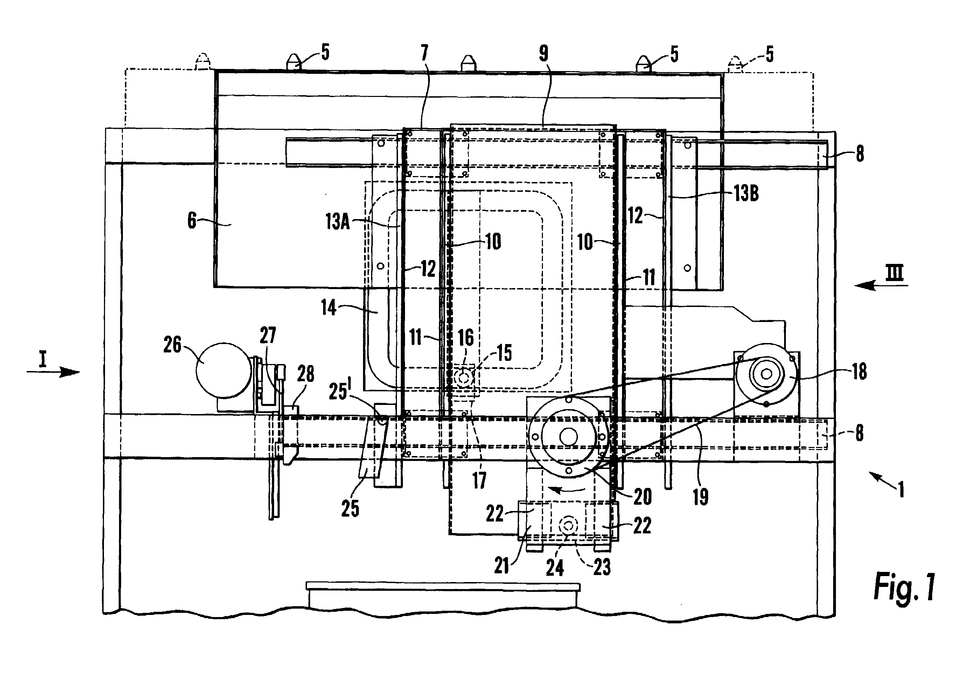

Referring to Figures 1 to 3, the system comprises a cabinet 1 receiving along and in its top a row of steel tanks (of which one is seen and referenced 2) to which are fitted respective ultrasonic transducers (not shown) and which contain cleaning liquids (not shown) for ultrasonic liquid cleaning of optical lenses (not shown) carried in a plurality of baskets (not shown) suspended beneath respective stepping brackets (of which one is shown and referenced 3). Each bracket 3 is formed with a through hole 4 able fittingly to receive any one of a horizontal row of vertical pegs 5 arranged along the top of a sheet metal beam 6 extending parallelly to the row of tanks 2. The rear end zone of each bracket 3 is shaped to nest against the upper end zone of the beam. A traversing carriage 7 is mounted in respective upper and lower horizontal slides 8 fixed to the cabinet, so that the carriage is slidable along the cabinet. A lift carriage 9 is guided by vertical slides 10 fixed thereto co-operating with vertical guides 11 fixed to the carriage 7, so that the carriage 9 is vertically reciprocable relative to the carriage 7. Also fixed to the carriage 7 outwardly of the respective guides 11 are respective vertical guides 12 with which co-operate respective vertical slides 13A and 13B fixed to the beam 6. Fixed to the rear wall of the cabinet 1 is a slot-form cam 14 of substantially rectangular, in this case substantially square, form, with two vertical sides and two horizontal sides. The cam 14 co-operates with a roller follower 15 mounted on a pin 16 extending through a hole 17 through the carriage 7 and fixed to the carriage 9. An electric motor 18 mounted on the cabinet drives, via a belt 19, a pulley 20 the axis of rotation of which is fixed relative to the cabinet 1. The pulley 20 rotates an arm 21 in a clockwise direction in Figure 1. The arm 21 includes a pair of guides 22 in which slides a block 23. The block 23 is rotatably connected to the slide 9 by way of a rotary bearing 24. This arrangement allows the circular motion provided by the arm 21 to be constrained to the substantially square motion produced by the cam-and-follower arrangement 14,15. Mounted on the slide 13A at its lower end zone so as to be turnable about a horizontal pivot pin 25' is a spring-loaded latch 25 which is urged by its spring (not shown) to turn clockwise into the position illustrated in Figure 1. A second electric motor 26 drives a crank 27 to reciprocate vertically a sliding block 28 guided in vertical guides fixed relative to the cabinet 1.

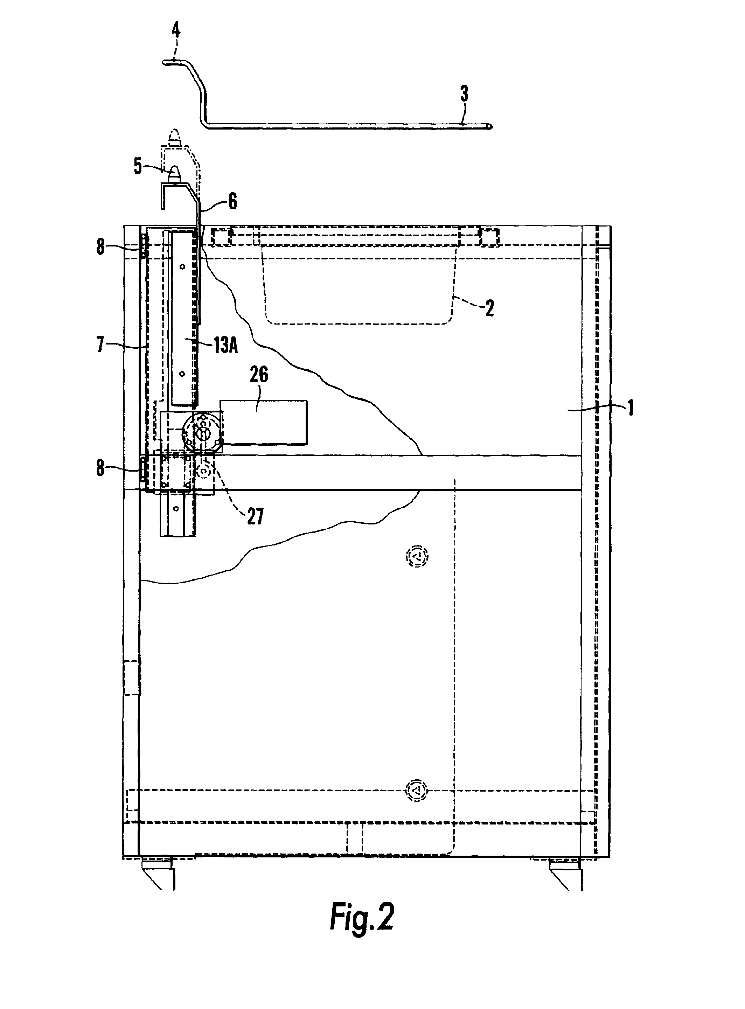

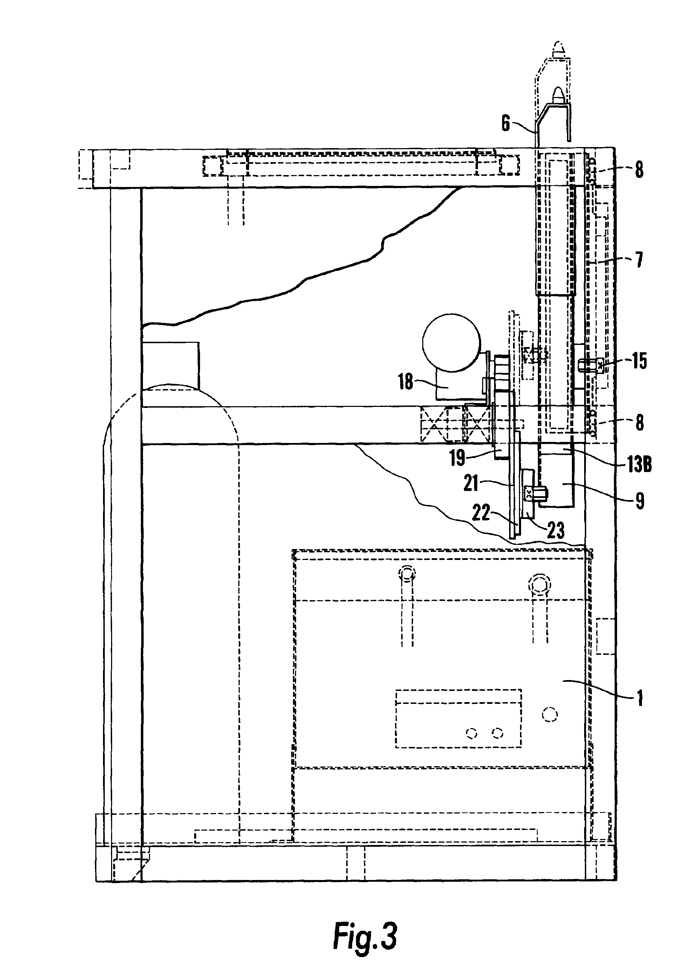

Starting from the condition of the apparatus as shown generally in full lines in Figures 1 to 3, in which the brackets 3 are resting on top of the cabinet 1, with their baskets in the tanks 2, and the pegs 5 are below the holes 4, continued rotation of the motor 18 causes the roller follower 15 to continue to move horizontally along the lowermost side of the cam 14, with the carriages 7 and 9 moving to the left in Figure 1 while the carriage 9 moves vertically upwards relative to the carriage 7. As the roller follower 15 turns the corner and begins to move up the left-hand vertical side of the cam 14 in Figure 1, by which time the beam 6 is in its left-hand end position illustrated in dot-dash lines, the latch 25 is pressed, against the action of its spring, against the block 28 and rides up the block 28 until the latch 25 has passed beyond the block 28, whereupon a detector switch (not shown) stops the advance of the carriage 7 and causes the motor 18 to reverse slightly until the now projecting lower end of the latch 25 has arrived at the top surface of the block 28. Then the motor 18 is de-energised to stop the motion of the carriage 7 and the motor 26 is energised to cause the block 28, via the latch 25, to lift the beam 6 so that the pegs 5 engage in the holes 4 in respective brackets 3 and the motor 26 performs a predetermined number of revolutions to cause the baskets carried by the brackets 3 to reciprocate vertically in the respective tanks 2 and thereby to perform a washing action upon the optical lenses in the baskets. In the washing action, the beam 6 is lifted and lowered between the positions shown in dot-dash lines and full lines in Figures 2 and 3. At the end of the washing action, and with the block 28 back in the lowered condition shown in Figure 1, the motor 18 is re-energised to advance the roller follower 15 up the vertical side of the cam 14 to cause the carriage 9 to engage beneath the top of the beam 6 and lift the beam to a level to bring the baskets upwards out of the tanks 2. Continued rotation of the motor 18 then causes the roller follower 15 to travel along the upper horizontal side of the cam 14 and so advance the beam 6 and thus the brackets 3 and the baskets to the right in Figure 1 until the roller follower 15 turns the corner into the right-hand vertical side of the cam 14. As the follower 15 travels down that vertical side, the baskets are lowered into the next respective tanks along the cabinet 1 and the beam 6 is lowered until it reaches the right-hand end position indicated in dot-dash lines in Figure 1, in which position the brackets 3 are again resting on top of the cabinet 1 with their baskets in the tanks 2 and with the pegs 5 withdrawn downwards out of the holes 4. Continued rotation of the motor 18 then causes the beam 6 to move to the left in Figure 1, with the pegs 5 moving beneath the deposited brackets 3, because the roller follower 15 has now turned back into the lower horizontal side of the cam 14.

If the washing action mentioned above is not required to be available, then the items 25 to 28 can be omitted and the beam 6 simply fixed firmly to the carriage 9.

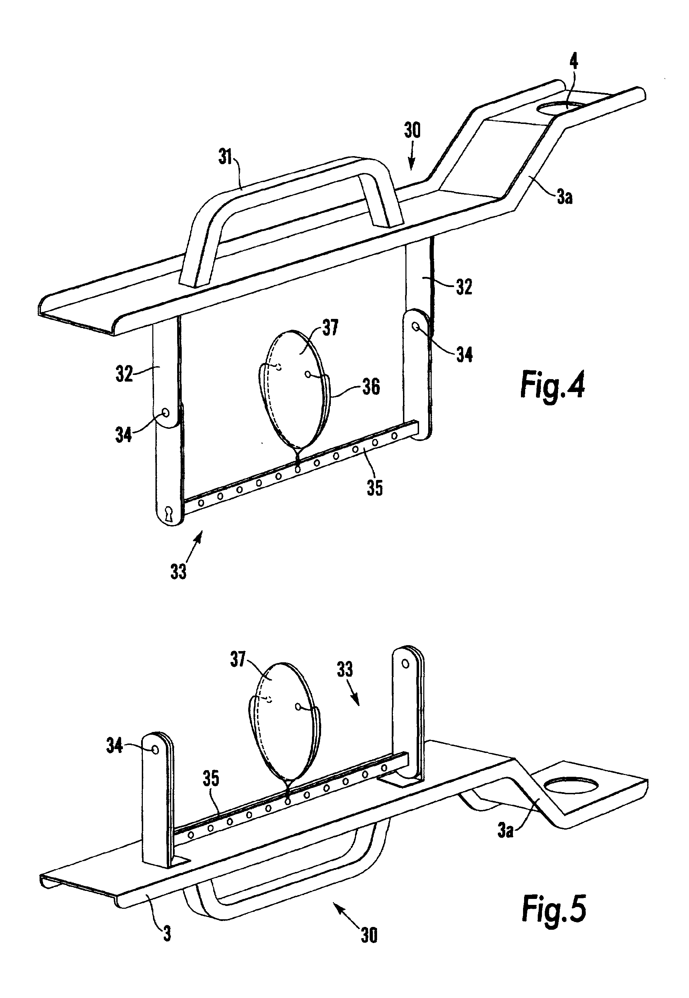

Referring to Figures 4 and 5, the modified version of the carrier has an upper support 30 including a stepping bracket 3 formed with a through hole 4. The rear end zone 3a of the bracket 3 is cranked to nest against the upper end zone of the beam 6 described with reference to Figures 1 to 3. A handle 31 fixed to a middle zone of the bracket 3 projects upwardly to substantially the same extent as the cranked zone 3a. The bracket 3 is in the form of a channel of U-section. Two legs 32 extend downwards from the middle zone of the bracket 3 and have pivotally suspended therefrom a U-shape lower support 33 so that the supports 30 and 33 are turnable through at least 180° relative to each other about horizontal pivots 34 providing a horizontal axis of turning. The base of the U-shape lower support 33 is a horizontal bar 35 on which are mounted upwardly extending resilient clips (of which one is shown and referenced 36) which are arranged in a horizontal row along the bar and which have respective lenses 37 inserted downwardly into them. In the treatment condition shown in Figure 4, the upper support 30 extends above the lenses 37 in the clips 36. To facilitate loading and unloading of the lenses into and from the clips, the upper support 30 can be swung down through 180° relative to the lower support 33, into the condition shown in Figure 5, in which the carrier 30,33 can be placed on a horizontal surface, if desired, and the lenses 37 loaded or unloaded unhindered by the support 30. The arrangements whereby the handle 30 and the cranked zone 3a protrude to the same extent as each other and whereby the handle 30 and the zone 3a provide a tripod promote ease of loading and unloading and stability on the horizontal surface.

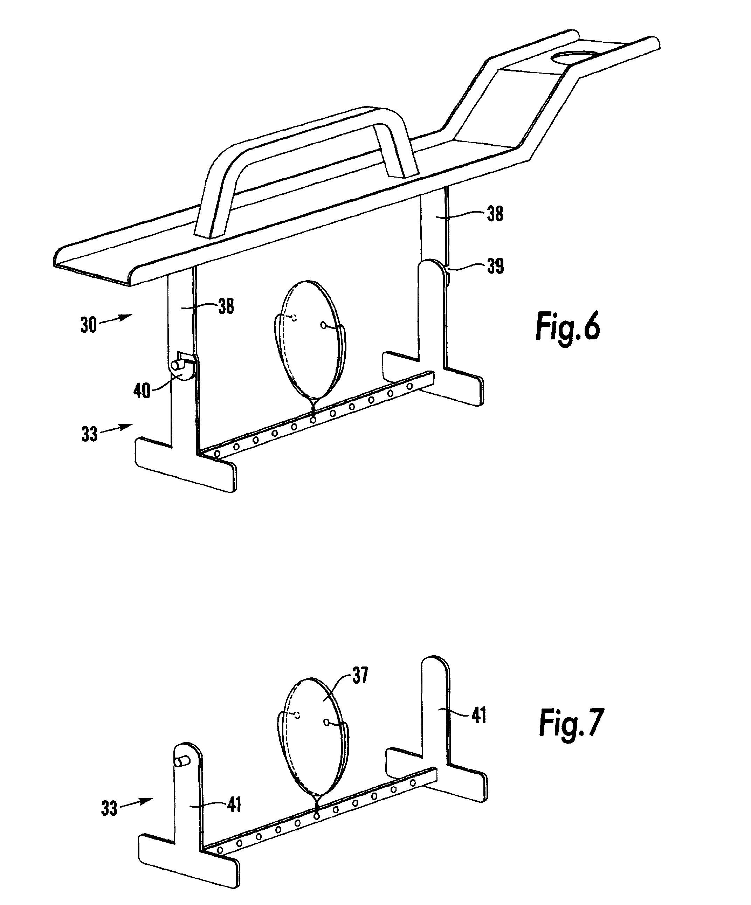

The carrier version shown in Figures 6 and 7 differs from that shown in Figures 4 and 5 in that the lower support 33 is readily detachably mounted on the upper support 30 and that the lower support 33 is so designed as to be stably free-standing when detached. The lower ends of the vertical limbs 38 of the upper support 30 are formed with L-shaped slots 39 to form hooks 40 to receive detachably the respective pivots 34. The vertical limbs 41 of the lower support 33 are of T-shape, so that, by way of the cross-bars of the Ts, the lower support can rest stably on a horizontal surface when detached. This version has the advantage that the user need not have one support 30 for each support 33, which, for efficient use of the whole apparatus, can involve having considerably more supports 30 than necessarily present on the beam 6, but the user can have more supports 33 than supports 30 and thus prepare rows of lenses 37 in the supports 33 well before they are required to be treated.

## Claims

1. Conveying apparatus comprising a carriage (7), guide means (14,15) arranged to guide said carriage (7) along a path such that a substantially vertical movement of said carriage (7) is followed by a substantially horizontal movement of said carriage (7), and driving means (18-24) arranged to advance said carriage (7) along said path.

2. Apparatus according to claim 1, wherein said driving means (18-24) comprises only one motor (18).

3. Apparatus according to claim 1 or 2, wherein said guide means (14,15) takes the form of a cam-and-follower arrangement (14,15), with the cam (14) being endless and supported on the carriage (7) or another support (1) and the follower (15) being supported on that other support (1) or the carriage (7), to cause said path to be endless.

4. Apparatus according to claim 3, wherein said driving means (18-24) includes a rotary arm (21) radially slidably linked to the follower (15) or to the cam (14).

5. A system including a conveying apparatus according to any preceding claim and a plurality of processing stations (2) through which an article (37) is transferred by the motion of the carriage (7) along the path.

6. A system according to claim 5, and further comprising a beam (6) extending over said stations (2) and mounted on the carriage (7) so as to be substantially vertically movable relative thereto, and second driving means (26-28) arranged to move said beam (6) substantially vertically relative to said carriage (7).

7. A conveying method comprising advancing a carriage (7) along a path while guiding said carriage (7) such that a substantially vertical movement of said carriage (7) is followed by a substantially horizontal movement thereof.

8. A method according to claim 7, wherein the motion of the carriage along the path is employed to transfer an article (37) through a plurality of processing stations (2).

9. A method according to claim 8, wherein the article (37) is raised and lowered in at least some of the processing stations (2).

10. A method according to any one of claims 7 to 9, wherein the path of movement of the carriage (7) is endless.

11. A carrier comprising an upper support (30), a lower support (33) supported by said upper support (30) and for unloadably supporting at least one article (37) to be treated, said upper support (30) being displaceable relative to said lower support (33) from a treatment position in which unloading of the article(s) (37) from said lower support (33) is hindered by said upper support (30) to an unloading position in which said unloading is not hindered by said upper support (30).

12. A carrier according to claim 11, wherein said lower support (33) comprises a horizontal bar (35) with one or more clips (36) for receiving the article(s) (37).

13. A carrier according to claim 11 or 12, wherein said lower support (33) is readily detachable from said upper support (30) to occupy an unloading position in which the lower support (33) is stably free-standing and is remote from said upper support (30).

14. A method comprising loading at least one article (37) into a carrier with a support (30) of said carrier being located beneath said article(s) (37), bringing said support (30) to above said article(s) (37), treating said article(s) (37), bringing said support (30) to below said article(s) (37), and unloading said article(s) (37) from said carrier.

15. 'A method comprising loading at least one article (37) into a lower support (33) of a carrier with said lower support (33) of said carrier being located beneath said article(s) (37) and an upper support (30) of said carrier not hindering said loading, bringing said upper support (30) to above said article(s) (37), treating said article(s) (37), bringing said upper support (30) to a position in which it does not hinder unloading of said article(s) (37), and unloading said article(s) (37) from said lower support (30).
